(19) Europäisches Patentamt
European Patent Office
Office européen des brevets

(11) **EP 2 072 118 B1**

(12) **EUROPÄISCHE PATENTSCHRIFT**

(45) Veröffentlichungstag und Bekanntmachung des Hinweises auf die Patenterteilung:
**19.04.2017 Patentblatt 2017/16**

(21) Anmeldenummer: **08018706.5**

(22) Anmeldetag: **24.10.2008**

(51) Int Cl.:
*B01J 21/06* (2006.01)       *B01J 35/00* (2006.01)
*B01J 35/02* (2006.01)       *B01J 37/02* (2006.01)
*C01G 23/053* (2006.01)

(54) **KERAMISCHER FORMKÖRPER MIT EINER PHOTOKATALYTISCH AKTIVEN, LUFTREINIGENDEN, TRANSPARENTEN OBERFLÄCHENBESCHICHTUNG UND VERFAHREN ZUR HERSTELLUNG DESSELBEN**

CERAMIC MOULD WITH A PHOTO-CATALYTIC ACTIVE, AIR PURIFYING, TRANSPARENT SURFACE COATING AND METHOD OF MANUFACTURING SAME

CORPS DE FORMAGE CÉRAMIQUE DOTÉ D'UN REVÊTEMENT DE SURFACE PHOTOCATALYTIQUE ACTIF, PURIFIANT L'AIR ET TRANSPARENT AINSI QUE SON PROCÉDÉ DE FABRICATION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.11.2007 DE 102007054848**

(43) Veröffentlichungstag der Anmeldung:
**24.06.2009 Patentblatt 2009/26**

(73) Patentinhaber: **ERLUS AKTIENGESELLSCHAFT 84088 Neufahrn (DE)**

(72) Erfinder:
• **Stoll, Alexander, Dr., 85354 Freising (DE)**
• **Ackerhans, Carsten Dr. 84066 Mallersdorf-Pfaffenberg (DE)**
• **Gast, Eduard Dr. 84559 Kraiburg (DE)**
• **Bahnemann, Detlef, Prof. Dr. 30826 Garbsen (DE)**
• **Stötzner, Julia 30926 Seelze (DE)**

(74) Vertreter: **Köhler, Walter Louis, Pöhlau, Lohrentz Patentanwälte Postfach 30 55 90014 Nürnberg (DE)**

(56) Entgegenhaltungen:
EP-A2- 1 659 106      WO-A1-96/00198
JP-A- 11 061 708      US-B1- 6 576 589

EP 2 072 118 B1

**Beschreibung**

Die Erfindung betrifft einen keramischen, vorzugsweise grobkeramischen, Formkörper mit einer photokatalytisch aktiven, luftreinigenden und vorzugsweise transparenten Beschichtung sowie ein Verfahren zur Herstellung derselben.

Aus der WO 03/101913 ist ein keramischer Formkörper, nämlich ein Dachziegel, Ziegel, Klinker oder eine Fassadenplatte, aus oxidkeramischem Basismaterial bekannt, der eine selbstreinigende Oberfläche aufweist, wobei der Formkörper eine poröse oxidkeramische Beschichtung aufweist und die Beschichtung photokatalytisch aktiv ist und durch Flammenhydrolyse hergestelltes $TiO_2$ enthält, wobei die Beschichtung eine spezifische Oberfläche in einem Bereich von etwa 25 $m^2$/g bis 200 $m^2$/g aufweist. Des weiteren offenbart die WO 03/101913 ein Verfahren zur Herstellung eines solchen grobkeramischen Formkörpers.

Obgleich das aus der WO 03/101913 bekannte Verfahren zur Herstellung von keramischen Formkörpern mit photokatalytisch aktiver Beschichtung gut geeignet ist, weisen gemäß diesem Verfahren hergestellte keramische Formkörper nur geringe luftreinigende Eigenschaften auf und neigen zu einer sogenannten "Weißstichigkeit". Diese Weißstichigkeit wird durch Lichtstreuung an den aufgebrachten Photokatalysatorpartikeln durch den sogenannten Tyndalleffekt hervorgerufen.

Die EP 1 659 106 A2 betrifft einen keramischen Formkörper mit photokatalytischaktiver Beschichtung und Verfahren zur Herstellung desselben. Die JP 11061798 betrifft ein mit photokatalytisch-aktivem Titanoxid beschichtetes anorganisches Bauteil. Die US 6,576,589 B1 betrifft ein Verfahren zur Herstellung eines $TiO_2$-Photokatalysators vom Anatastyp.

Aufgabe der Erfindung ist es, einen verbesserten keramischen Formkörper und ein Verfahren zur Herstellung desselben bereitzustellen, welcher neben photokatalytisch aktiven selbstreinigenden Eigenschaften auch luftreinigende Eigenschaften aufweist.

Eine weitere Aufgabe der Erfindung ist es vorzugsweise, einen verbesserten keramischen Formkörper und ein Verfahren zur Herstellung desselben bereitzustellen, welcher eine transparente Oberflächenbeschichtung aufweist. Unter transparenter Oberflächenbeschichtung ist vorzugsweise eine Oberflächenbeschichtung zu verstehen, deren Lichttransmission mehr als 90 %, vorzugsweise mehr als 99 %, beträgt. Vorzugsweise ist die transparente Oberflächenbeschichtung farblos.

Ferner ist es vorzugsweise Aufgabe der Erfindung, einen verbesserten keramischen Formkörper und ein Verfahren zur Herstellung desselben bereitzustellen, welcher eine festhaftende Oberflächenbeschichtung aufweist.

Die der Erfindung zugrundeliegende Aufgabe wird durch einen keramischer Formkörper, nämlich Dachziegel, Ziegel, Klinker und/oder eine Fassadenplatte, aus oxidkeramischem Basismaterial mit Kapillargefüge mit einer luftreinigenden Oberflächenbeschichtung, welche vorzugsweise transparent ist, gemäß Anspruch 1 gelöst.

Ferner kann die Oberflächenbeschichtung des erfindungsgemäßen keramischen Formkörpers peptisierte, nicht-photokatalytisch aktive Partikel umfassen, nicht photokatalytisch-aktive Partikel umfassen, welche von einer Schicht aus peptisierten Partikeln umgeben sind, und/oder nicht peptisierte, nicht-photokatalytisch aktive Partikel umfassen. Bei den peptisierten Partikeln kann es sich um nicht photokatalytisch-aktive Partikel und/oder um photokatalytisch-aktive Partikel handeln.

Unter Peptisierung bzw. Peptisieren von Partikeln wird verstanden, dass die bei der Herstellung der Partikel entstandenen Sekundäraggregate der Partikel in Primäraggregate überführt werden, welche elektrostatisch stabilisiert vorliegen. Dies erfolgt mit Hilfe eines Dispergiermittels. Unter peptisierten Partikeln sind daher vorzugsweise Partikel zu verstehen, an deren Oberfläche ein elektrostatisch geladenes oder elektrostatisch aufladbares Dispersionsmittel angelagert ist. Durch diese Anlagerung, welche auch als Peptisierung bezeichnet wird, werden die beim Herstellen der Partikel entstandenen Sekundäraggregate in Primäraggregate überführt, die stabile kolloidale Dispersionen bilden können. Vorzugsweise sind diese stabilen kolloidalen Dispersionen aufgrund der elektrostatischen Stabilisation mindestens 1 Jahr, vorzugsweise 1 Jahr bis 5 Jahre, lagerfähig.

Unter "peptisierten Partikeln" sind vorzugsweise Partikel zu verstehen, an welche als Dispergiermittel beispielsweise Salpetersäure, Zitronensäure und/oder Salzsäure angelagert ist/sind, welches der Aggregation der Partikel entgegenwirkt. Vorzugsweise sind die peptisierten Partikel mit einer monomolekularen oder bimolekularen Schicht aus Salpetersäuremolekülen, Zitronensäuremolekülen und/oder Salzsäuremolekülen umgeben.

Hierdurch wird verhindert, das die peptisierten Partikel aus den Dispersionen nach längerer Lagerung ausfallen. Die elektrostatische Stabilisierung wird dadurch bewirkt, dass vorzugsweise geladene Moleküle an der Oberfläche der Primäraggregate angelagert werden. Diese geladenen Moleküle können auch als Peptidschicht bezeichnet werden. Unter peptisierten Partikeln sind Partikel mit einer Peptidschicht zu verstehen. Die Peptidschicht kann vollständig oder teilweise geschlossen sein. Durch die Peptisierung bzw. Peptidschicht wird eine Reaggregation der Partikel und/oder Primäraggregate zu Sekundäraggregaten weitgehend vermieden.

Vorzugsweise weist die Peptidschicht auf den nicht photokatalytisch-aktiven peptisierten Partikeln und/oder auf den photokatalytisch-aktiven peptisierten Partikeln eine Dicke von 0,5 nm bis 5 nm, vorzugsweise 1 nm bis 2 nm, auf.

Die Größe der Sekundäraggregate vor der Peptisierung beträgt vorzugsweise 100 bis 200 nm, weiter bevorzugt 130 bis 170 nm. Die Größe der Primäraggregate entspricht vorzugsweise der einzelner peptisierter Partikel und/oder eines einzelnen sphärischen Schichtenaggregates bis zu einer Aggregatgröße von 50 nm, vorzugsweise 25 nm, weiter bevorzugt 10 nm. Unter sphärischem Schichtenverbund sind vorzugsweise einzelne Primäragglomerate oder Primäraggregate aus mehreren wenigen, vorzugsweise 2 bis 5, peptisierten photokatalytisch aktiven Partikeln oder Partikeln, die von peptisierten Partikel umgeben sind, zu verstehen, die vorzugsweise die vorstehend angegebene Größe aufweisen.

Vorzugsweise ist die Oberflächenbeschichtung hydrophil.

Bei einer Ausführungsform wird die Oberflächenbeschichtung in keinem Sol-Gel-Verfahren hergestellt.

Bei einer Ausführungsform des erfindungsgemäßen keramischen Formkörpers weisen die photokatalytisch aktiven Partikel eine mittlere Partikelgröße von 2 bis 20 nm, vorzugsweise von 2 bis 9 nm, weiter bevorzugt von 4 bis 6 nm, auf.

Bei einer Ausführungsform des erfindungsgemäßen keramischen Formkörpers weisen die photokatalytisch aktiven Partikel eine Bandlücke von 3,0 bis 3,5 eV auf.

Bei einer Ausführungsform des erfindungsgemäßen keramischen Formkörpers sind die photokatalytisch-aktiven Partikel aus der Gruppe, bestehend aus $TiO_2$ in der Rutil-Modifikation, $TiO_2$ in der Anatas-Modifikation, ZnO, $\alpha$-$Fe_2O_3$, $\gamma$-$Al_2O_3$ $SrTiO_3$, $SnO_2$, $WO_3$, $Bi_2O_3$ und Mischungen davon, ausgewählt. Vorzugsweise wird $TiO_2$ in der Anatas-Modifikation und/oder ZnO verwendet.

Erfindungsgemäß weisen die photokatalytisch-aktiven Partikel und/oder nicht photokatalytisch-aktiven Partikel eine nach der BET-Methode ermittelte spezifische Oberfläche von 250 bis 500 $m^2$/g, am meisten bevorzugt von 300 bis 350 $m^2$/g, auf.

Bei einer Ausführungsform des erfindungsgemäßen keramischen Formkörpers umfassen die photokatalytisch-aktiven Partikel $TiO_2$, welches zu mindestens 90 Gew.- %, weiter bevorzugt zu mindestens Gew.-98%, am meisten bevorzugt zu 100 Gew.-%, bezogen auf das Gesamtgewicht des $TiO_2$, in der Anatasform vorliegt.

Bei einer Ausführungsform ist das $TiO_2$ durch Flammenhydrolyse vorzugsweise als hochdisperses $TiO_2$ erzeugt.

Vorzugsweise wird Aluminiumoxid eingesetzt, welches kristallographisch in der $\delta$-Form vorliegt. Geeignetes Aluminiumoxid ist bei Evonik/Degussa als Aluminiumoxid C erhältlich. Beispielsweise hat sich Aerosil COK 84, eine Mischung aus 84 Gew.-% Aerosil und 16 Gew.-% Aluminiumoxid C, bezogen auf das Gesamtgewicht von Aerosil und Aluminiumoxid C, als sehr geeignet erwiesen. Dieses liegt zunächst in aggregierter Form vor, wird aber durch Peptisierung, vorzugsweise mit Salpetersäure, in einzelne Partikel oder kleinere Aggregate, wie vorstehend definiert, zerteilt.

Bei einer Ausführungsform des erfindungsgemäßen keramischen Formkörpers sind die $TiO_2$-Partikel durch ein Sulfataufschlußverfahren herstellbar.

Beim Sulfataufschlußverfahren wird beispielsweise aus $FeTiO_3$ durch Reduktion mit Koks metallische Titanschlacke erhalten. Diese Titanschlacke kann mit konzentrierter Schwefelsäure bei 100 bis 180°C behandelt werden. Der hierbei gewonnene Aufschlusskuchen kann, ggf. unter Zusatz von Eisenschrott, in heißem Wasser gelöst werden. Hierbei fällt $TiO_2 \cdot xH_2O$ aus, welches bei 800 bis 1000 °C zu $TiO_2$ gebrannt werden kann, welches vorzugsweise in der Anatas-Form vorliegt.

Auch das im Sulphataufschlußverfahren hergestellte Titandioxid wird vorzugsweise in Kombination mit Aluminiumoxid eingesetzt, welches vorzugsweise kristallographisch in der $\delta$-Form vorliegt.

Bei einer Ausführungsform des erfindungsgemäßen Formkörpers sind die nicht photokatalytisch-aktiven Partikel ausgewählt aus der Gruppe, bestehend aus $\alpha$-$Al_2O_3$, $SiO_2$ und Mischungen davon. Vorzugsweise weisen die nicht photokatalytisch-aktiven Partikel, ohne Peptisierung gemessen, eine mittlere Partikelgröße von 5 bis 25 nm, vorzugsweise 10 bis 15 nm, auf, wobei es sich vorzugsweise um einzelne Partikel handelt, die nicht aggregiert sind.

Bei einer Ausführungsform des erfindungsgemäßen Formkörpers beträgt das Massenverhältnis der photokatalytischen Partikel zu den nicht photokatalytisch-aktiven Partikeln von 2,5:6 bis 5:6, vorzugsweise von 3:6 bis 4:6. Vorzugsweise werden als photokatalytisch-aktive Partikel Titandioxid-Partikel und/oder als nicht photokatalytisch-aktive Partikel $SiO_2$-Partikel eingesetzt.

Bei einer Ausführungsform des erfindungsgemäßen keramischen Formkörpers umfasst die Oberflächenbeschichtung $TiO_2$-Partikel, die von einer vollständig oder teilweise geschlossenen Schicht aus peptisierten $Al_2O_3$·Partikeln umgeben sind, und/oder umfasst peptisierte $TiO_2$-Partikel. Vorzugsweise ist zwischen den $TiO_2$-Partikeln und der vollständig oder teilweise geschlossenen Schicht aus peptisierten $Al_2O_3$-Partikeln eine Metatitansäureschicht angeordnet und/oder zwischen den $TiO_2$-Partikeln und der Peptidschicht ist eine Metatitansäureschicht angeordnet. Vorzugsweise ist die Metatitansäureschicht vollständig geschlossen.

Die Metatitansäureschicht weist vorzugsweise eine Dicke in einem Bereich von 2 bis 20 nm, weiter bevorzugt von 2 bis 5 nm, auf.

Bei einer Ausführungsform des erfindungsgemäßen keramischen Formkörpers bilden die $TiO_2$-Partikel, die Metatitansäureschicht und die Schicht aus peptisierten $Al_2O_3$-Partikeln einen Verbund von einer mittleren Partikelgröße von 30 nm bis 50 nm, vorzugsweise 35 bis 45 nm.

Bei einer Ausführungsform des erfindungsgemäßen keramischen Formkörpers weist die Oberflächenbeschichtung eine mittlere Porengröße von 2 bis 10 nm, vorzugsweise von 2 bis 5 nm, auf.

Bei einer Ausführungsform weist die Oberflächenbeschichtung keine Erhebungen oder Erhebungen von weniger als 50 nm, vorzugsweise weniger als 30 nm auf. Unter Erhebungen der Oberflächenbeschichtung ist vorzugsweise die Strukturierung der Oberflächenbeschichtung selbst zu verstehen. Selbstverständlich kann das oxidkeramische Basismaterial selbst eine zusätzliche Strukturierung im Nano- oder Mikrometerbereich aufweisen. Beispielsweise weist das oxidkeramische Basismaterial Erhebungen in einem Bereich von 10 bis 40 $\mu$m auf. Bei einer bevorzugten Ausführungsform weist die Oberflächenbeschichtung des erfindungsgemäßen keramischen Formkörpers nur die Abstände und Höhen auf, die sich aus der Größe der photokatalytisch aktiven Partikel, die als dichteste Kugelpackung angeordnet sind, ergeben.

Bei einer Ausführungsform des erfindungsgemäßen keramischen Formkörpers weist die Oberflächenbeschichtung eine Dicke in einem Bereich von 20 bis 400 nm, 50 bis 200 nm, auf. Bei einer anderen Ausführungsform besteht die Oberflächenbeschichtung lediglich aus einer monomolekularen Schicht.

Bei einer Ausführungsform des erfindungsgemäßen keramischen Formkörpers umfasst die Oberflächenbeschichtung ferner ein organisches oder anorganisches Bindemittel. Vorzugsweise ist das anorganische Bindemittel aus der Gruppe, bestehend aus Wasserglas, Kieselsäure, deren Derivate sowie Mischungen davon, ausgewählt. Beispielsweise liegt das Gewichtsverhältnis von Bindemittel zu photokatalytisch-aktiven Partikeln in einem Bereich von 1 : 1 bis 1 :0,6, bezogen auf die fertige Oberflächenbeschichtung.

Bei einer Ausführungsform des erfindungsgemäßen keramischen Formkörpers ist zwischen dem oxidkeramischem Basismaterial mit Kapillargefüge und der Oberflächenbeschichtung eine Engobe oder eine Glasur angeordnet. Bei einer anderen Ausführungsform des erfindungsgemäßen keramischen Formkörpers ist eine Engobe oder eine Glasur zwischen dem oxidkeramischem Basismaterial mit Kapillargefüge und der Oberflächenbeschichtung angeordnet.

Bei einer anderen Ausführungsform ist zwischen dem oxidkeramischen Basismaterial mit Kapillargefüge und der Oberflächenbeschichtung keine Engobe oder keine Glasur angeordnet.

Eine Glasur im Sinne der vorliegenden Erfindung ist vorzugsweise ein glasiger, 0,2 bis 10 mm, weiter bevorzugt 1-3 mm, dünner Überzug auf einem grobkeramischen Formkörper. Die Glasur ist vorzugsweise niedrig schmelzend bei einer Temperatur von vorzugsweise unter 800°C bis 1300 °C, weiter bevorzugt bei einer Temperatur von 900°C bis 1100 °C, weiter bevorzugt niedriger schmelzender als der überzogene grobkeramische Grundkörper. Die Glasur gleicht vorzugsweise die Rauhigkeit des Grundkörpers aus. Bei einer Ausführungsform ist die Glasur wasserundurchlässig, jedoch vorzugsweise aufgrund einer Mikroporösität für Wasserdampf noch durchlässig, so dass die ursprünglichen Eigenschaften des keramischen Formkörpers, nämlich Dachziegel, Ziegel, Klinker und/oder Fassadenelemente, hinsichtlich der Wasserdampfdurchlässigkeit nicht eingeschränkt werden. Meist wird die Glasur zu Dekorzwecken aufgebracht und kann in Farbe, Transparenz, Opazität und Glanz variieren. Bei einer Ausführungsform umfasst oder besteht die Glasur aus 50-80 Gew.-% Glasfritte, 10-40 Gew.-% Ton und/oder Kaolin sowie 0-40 Gew.-% Farbpigmenten und/oder Trübungsmittel.

Die Glasfritte ist vorzugsweise ein niedrigschmelzendes Glaspulver, welches aus einer $SiO_2$-Schmelze unter Zusatz von schmelzpunterniedrigenden Oxiden, wie $Li_2O$, $Na_2O$, $K_2O$, $B_2O_3$, CaO, BaO, $Bi_2O_3$, und/oder ZnO, gewonnen wird. Als Trübungsmittel werden beispielsweise hochschmelzende Oxide, wie z.B. $Al_2O_3$, $SnO_2$, $ZrO_2$, $As_2O_3$, $As_2O_5$, $CeO_2$, $WO_3$, $V_2O_3$, und/oder $V_2O_5$ eingesetzt, welche vorzugsweise nicht aufschmelzen und somit gleichmäßig als Partikel in der Schmelze verteilt werden. Als Farbpigmente werden vorzugsweise farbige Metalloxide, wie die CoO, $Co_2O_3$, $Co_3O_4$, NiO, $Ni_2O_3$, CuO, $Cr_2O_3$, $UO_2$, $UO_3$, $Sb_2O_3$, $Sb_2O_5$, $MnO_2$, $TiO_2$, FeO, $Fe_2O_3$, $Fe_3O_4$, MgO, BeO, SrO, $SeO_3$, $Er_2O_3$, und/oder $Sb_2O_3$, oder bei Giftigkeit bereits gekapselte Metalloxide, einzeln oder in einem Mischungsverhältnis zugegeben, so dass die gewünschte Farbe erhalten wird.

Engobierte Dachziegel weisen im Unterschied zu den glasierten Dachziegeln 60 bis 100 Gew.-% Ton und/oder Kaolin und/oder Bentonit und gegebenenfalls 0 bis 40 Gew.-% Glasfritte, bezogen auf das Gesamtgewicht der Engobe, auf.

Bei einer Ausführungsform des erfindungsgemäßen keramischen Formkörpers ist die Oberflächenbeschichtung auf der gesamten Oberfläche des oxidkeramischen Basismaterials mit Kapillargefüge angeordnet. Bei einer anderen Ausführungsform des erfindungsgemäßen keramischen Formkörpers ist die Oberflächenbeschichtung lediglich auf der Seite des keramischen Formkörpers angeordnet, die dem Sonnenlicht und/oder den Abgasen in der Luft ausgesetzt wird.

Bei einer Ausführungsform weist die Oberflächenbeschichtung selbstreinigende Eigenschaften auf.

Unter dem Begriff selbstreinigende Oberflächenbeschichtung im Sinne der Erfindung wird verstanden, daß sich auf der Oberflächenbeschichtung ablagernde Schimmel, Pilzhüfen, Pflanzenwuchs, beispielsweise Moos und/oder Algen, bakterielle Verunreinigungen und/oder Verunreinigungen aus Industrieanlagen photochemisch abgebaut und entfernt werden. Die selbstreinigende Beschichtung oxidiert die genannten Stoffe bzw. Verunreinigungen, wodurch diese ein vermindertes Haftungsvermögen aufweisen und bei Beregnung bzw. bei Berieselung mit Wasser leicht von der Oberfläche des erfindungsgemäßen Formkörpers abgespült werden.

Es wird vermutet, daß die photokatalytisch aktive Beschichtung zum einen unmittelbar auf die organischen Verunreinigungen oxidativ einwirken kann. Zum anderen wird angenommen, daß die oxidative Wirkung der photokatalytisch aktiven Beschichtung mittelbar durch die Erzeugung von Sauerstoffradikalen und/oder Hydroxylradikalen erfolgt, die nachfolgend die Verschmutzungsstoffe und/oder Verunreinigungen oxidieren und mithin abbauen.

Bei einer Ausführungsform ist der keramische Formkörper geeignet, sowohl organische Schadstoffe als auch anorganische Schadstoffe, wie beispielsweise Stickoxide, abzubauen. Unter einer luftreinigenden Oberflächenbeschichtung im Sinne der Erfindung wird vorzugsweise verstanden, daß in der Luft vorkommende Schadgase und/oder Schadstoffe, wie z.B. $NO_X$, $SO_X$, Formaldehyd, Acetaldehyd, Toluol, photokatalytisch abgebaut werden und somit die umgebende Luft reinigen.

Überraschenderweise wurde gefunden, daß eine wie in Anspruch 1 definierte Oberflächenbeschichtung neben selbstreinigenden auch luftreinigende Eigenschaften aufweist.

Ferner wurde überraschenderweise gefunden, daß eine wie in Anspruch 1 definierte Oberflächenbeschichtung eine hervorragende Haftung auf dem keramischen Formkörper, insbesondere auf einem glasierten keramischen Formkörper, aufweist.

Ferner wurde überraschenderweise gefunden, daß der erfindungsgemäße keramische Formkörper eine transparente und/oder matte Oberfläche aufweist.

Bei einer Ausführungsform des erfindungsgemäßen Formkörpers ist dieser gemäß dem nachfolgend beschriebenen Verfahren herstellbar.

Bei einer Ausführungsform des erfindungsgemäßen Formkörper wird die Peptidschicht und/oder die Metatitansäureschicht durch Erwärmen, vorzugsweise auf über 100°C bis 600°C, weiter bevorzugt 300 bis 600°C, ganz oder teilweise entfernt. Der so erhaltene Formkörper weist eine sehr fein verteilte Oberflächenbeschichtung auf. Vorzugsweise wird die Peptidschicht zu mindestens 50 Gew.-%, weiter bevorzugt zu mindestens 90 Gew.-%, am meisten bevorzugt zu 95 Gew.-%, bezogen auf das Gesamtgewicht der Peptidschicht, entfernt. Vorzugsweise wird die Metatitansäureschicht zu mindestens 50 Gew.-%, weiter bevorzugt zu mindestens 90 Gew.-%, am meisten bevorzugt zu 95 Gew.-%, bezogen auf das Gesamtgewicht der Metatitansäureschicht, entfernt.

Die vorstehend für den keramischen Formkörper beschriebenen vorteilhaften Eigenschaften bleiben auch nach dem Entfernen der Peptidschicht bzw. der Peptisierung erhalten, da die feine Verteilung der Partikel in der Oberflächenbeschichtung nicht beeinflusst wird.

Die der Erfindung zugrundeliegende Aufgabe wird ferner durch ein Verfahren zur Herstellung eines grobkeramischen Formkörpers, nämlich eines Dachziegels, Ziegels, Klinkers und/oder einer Fassadenplatte, aus oxidkeramischem Basismaterial mit Kapillargefüge und mit einer luftreinigenden Oberflächenbeschichtung, welche vorzugsweise transparent ist, gemäß Anspruch 8 gelöst.

Bei einer Ausführungsform des erfindungsgemäßen Verfahrens wird nach Schritt c) in einem weiteren Schritt d) die in Schritt c) bereitgestellte Schicht bei Temperaturen gehärtet, bei welchen die Peptisierung abgespalten wird.

Bei dem erfindungsgemäßen Verfahren können in Schritt a) peptisierte photokatalytisch-aktive Partikel und/oder photokatalytisch-aktive Partikel, welche von einer Schicht aus peptisierten Partikeln umgeben sind, eingesetzt werden, wie bereits vorstehend in Bezug auf den erfindungsgemäßen Formkörper definiert.

Bei dem erfindungsgemäßen Verfahren werden der Dispersion in Schritt a) ferner peptisierte und/oder nicht-peptisierte nicht photokatalytisch-aktive Partikel zugesetzt. Vorzugsweise handelt es sich bei den nicht photokatalytisch-aktiven Partikeln um $SiO_2$-Partikel. Vorzugsweise sind die $SiO_2$-Partikel nicht peptisiert.

Bei dem erfindungsgemäßen Verfahren werden in Schritt a) der Dispersion $TiO_2$-Partikel zugesetzt, die von einer Metatitansäureschicht umgeben sind, und wobei um die Metatitansäureschicht in der äußersten Schicht eine vollständig oder teilweise geschlossenen Schicht aus peptisierten $Al_2O_3$-Partikeln angeordnet ist.

Die peptisierten photokatalytisch-aktiven Partikel und/oder nicht photokatalytisch-aktiven Partikel können durch Dispergieren in einer Dispergiermittellösung erhalten werden. Unter Dispergiermittellösung sind vorzugsweise partikelfreie Lösungen zu verstehen, die der Aggregation der photokatalytisch aktiven Partikeln entgegen wirken und ein Dispergiermittel enthalten. Beispielsweise können Dispergiermittellösungen, umfassend Zitronensäure, Salpetersäure und/oder Salzsäure als Dispergiermittel, eingesetzt werden. Vorzugsweise enthalten die Lösungen, 1 bis 20 Gew.-%, weiter bevorzugt 5 bis 10 Gew.-%, des Dispergiermittels, bezogen auf das Gesamtgewicht der Dispergierlösung ohne die zu peptisierenden Partikel.

Beispielsweise können die peptisierten photokatalytisch-aktiven Partikel und/oder nicht photokatalytisch-aktiven peptisierten Partikel analog dem in der EP 1175259 B1 beschriebenen Verfahren hergestellt werden.

Bei einer Ausführungsform des erfindungsgemäßen Verfahrens werden die $TiO_2$-Partikel vor dem Schritt a) durch ein Sulphataufschlußverfahren und/oder durch ein Flammenhydrolyseverfahren hergestellt.

Bei einer Ausführungsform des erfindungsgemäßen Verfahrens wird in Schritt b) die Oberflächenbeschichtung in einer Dicke von 20 bis 400 nm, vorzugsweise 50 bis 200 nm, auf das oxidkeramische Basismaterial mit Kapillargefüge aufgebracht.

Bei einer Ausführungsform wird auf das oxidkeramische Basismaterial mit Kapillargefüge zunächst eine Engobe oder Glasur aufgebracht und anschließend die Oberflächenbeschichtung aufgebracht. Bei einer anderen Ausführungsform wird auf das oxidkeramische Basismaterial mit Kapillargefüge zunächst die Oberflächenbeschichtung aufgebracht und anschließend eine Engobe oder Glasur aufgebracht. Die Oberflächenbeschichtung kann jedoch auch auf einen grobkeramischen Formkörper ohne Engobe oder Glasur aufgebracht werden.

Bei einer Ausführungsform des erfindungsgemäßen Verfahrens wird die in Schritt a) hergestellte Dispersion auf einen pH-Wert ≤ 3, vorzugsweise ≤ 2, weiter bevorzugt auf einen pH-Wert von 1 bis 2, eingestellt. Vorzugsweise wird zum Einstellen des pH-Werts Salpetersäure verwendet.

Bei einer Ausführungsform des erfindungsgemäßen Verfahrens wird in Schritt c) die Oberflächenbeschichtung bei 10 bis 90°C getrocknet. Vorzugsweise werden Schritt b) und c) kombiniert durchgeführt und die Oberflächenbeschichtung bei einer Oberflächentemperatur des oxidkeramischen Basismaterials von 10 bis 90 °C aufgebracht.

Bei einer Ausführungsform des erfindungsgemäßen Verfahrens wird in Schritt d) die Oberflächenbeschichtung bei einer Temperatur von 100 bis 600 °C , vorzugsweise von 200° C bis 450° C, weiter bevorzugt von 250 bis 300 °C, gehärtet. Bei einer Ausführungsform des erfindungsgemäßen Verfahrens dauert dieser Härtungsprozeß 2 bis 20 Minuten, vorzugsweise 5 bis 10 Minuten. Durch die thermische Nachbehandlung wird Wasser von der ggf. vorhandenen Metatitansäure abgespalten. Ferner werden vorzugsweise auch die an der Oberfläche der peptisierten Partikel angelagerten Säuren freigesetzt. Die Abspaltung der Metatitansäure und/oder der Peptidschicht kann teilweise oder vollständig erfolgen. Bei Temperaturen von mindestens 300°C erfolgt weitgehend eine vollständige Abspaltung der Metatitansäure und/oder der Peptidschicht.

Bei einer Ausführungsform des erfindungsgemäßen Verfahrens wird in Schritt a) ferner ein organisches oder anorganisches Bindemittel der Dispersion beigemischt. Vorzugsweise wird ein anorganisches Bindemittel, beispielsweise Wasserglas, Kieselsäure, Titansäure, deren Derivate und/oder Mischungen davon, als Bindemittel eingesetzt. Vorzugsweise wird in Schritt a) das Bindemittel in einer Menge von 0,01 Gew.-% bis 10 Gew.-%, bezogen auf das Gesamtgewicht der Dispersion, zugemischt.

Bei einer Ausführungsform des erfindungsgemäßen Verfahrens werden in Schritt a) die photokatalytisch-aktiven Partikel ohne Berücksichtigung eventuell umgebender Schichten in einer Menge von 0,01 Gew.-% bis 10 Gew.-%, vorzugsweise 1 Gew.-% bis 2,5 Gew.-%, bezogen auf das Gesamtgewicht der in Schritt a) hergestellten Dispersion, zugegeben.

Bei einer Ausführungsform des erfindungsgemäßen Verfahrens werden in Schritt a) die nicht photokatalytisch-aktiven Partikel ohne Berücksichtigung eventuell umgebender Schichten in einer Menge von 0,01 Gew.-% bis 20 Gew.-%, vorzugsweise 1 Gew.-% bis 4 Gew.-%, bezogen auf das Gesamtgewicht der in Schritt a) hergestellten Dispersion, zugegeben.

Zur Herstellung der Dispersion in Schritt a) wird ein polares Lösungsmittel, beispielsweise Wasser, kurzkettige ein- oder mehrwertige aliphatische Alkohole, wie z.B. Methanol, Ethanol, und/oder analoge einwertige Alkohole, Glykole, wie z.B. Ethylenglykol, analoge Diole und/oder Glykolether und/oder andere polare organische Lösungsmittel, wie Ester, Aceton, Acetonitril, und/oder analoge Ketone und/oder Nitrile und/oder Mischungen dieser Lösungsmittel verwendet. Vorzugsweise wird als polares Lösungsmittel Wasser verwendet. Vorzugsweise wird ein alkoholfreies Lösungsmittel eingesetzt. Dies vereinfacht die Verfahrensführung, da kein Explosionsschutz notwendig ist. Bei einer besonders bevorzugten Ausführungsform wird als Lösungsmittel Wasser zusammen mit einem Tensid eingesetzt. Grundsätzlich sind alle Arten von Tensiden, wie beispielsweise nicht-ionische, ionische und/oder amphotere Tenside geeignet. Besonders bevorzugt wird ein nicht-ionisches Tensid, insbesondere auf der Basis von Ethylenoxid- und/oder Propylenoxid-Polymeren eingesetzt. Beispielsweise hat sich Pluronic F-127 als geeignet erwiesen. Vorzugsweise beträgt die Tensidmenge in der Dispersion 0,1 bis 0,6 Gew.-%, weiter bevorzugt 0,2 bis 0,4 Gew.-%, bezogen auf das Gesamtgewicht der Dispersion.

Bei einer Ausführungsform beträgt das Zetapotential der in Schritt a) aufzubringenden Lösung -20 bis -40 mV, vorzugsweise -25 bis -35 mV. Das Zetapotential wird vorzugsweise bei Raumtemperatur (25 °C) bestimmt. Beispielsweise kann das Zetapotential mit dem Zeta-Particle-Sizer DT-1200 der Firma QuantaChrome bestimmt werden.

Die Dispersion kann in Schritt a) durch Rühren, Ultraschall, Ultrathorax oder eine Kolloidmühle hergestellt werden.

Bei einer Ausführungsform wird in Schritt b) die Dispersion auf ein oxidkeramisches Basismaterial, vorzugsweise einen Dachziegel, Ziegel, Klinker und/oder Fassadenplatte, aufgebracht, welches eine Feuchtigkeit von 0,1 bis 2 %, bezogen auf das Gesamtgewicht des grobkeramischen Formkörpers, aufweist.

Bei einer Ausführungsform wird in Schritt b) die in Schritt a) hergestellte Dispersion durch Sprühen, Schütten, Tauchen oder Ziehen aufgetragen. Der keramische Formkörper kann hierzu bei Raumtemperatur belassen werden und nachträglich getrocknet werden oder auf einen Temperaturbereich von 10° bis 90° C vorgewärmt werden. Vorzugsweise beträgt beim nachträglichen Trocknen die Temperatur 40 bis 60°C oder die Temperatur des Dachziegels beträgt beim Auftragen der Dispersion 40° bis 60° C.

Bei einer Ausführungsform des erfindungsgemäßen Verfahrens werden zunächst Kieselsäurepartikel mit einer Partikelgröße in einem Bereich von 3 bis 7 nm, vorzugsweise von 4 bis 6 nm, in VE-Wasser (vollentsalztes Wasser) dispergiert. Vorzugsweise werden die Kieselsäurepartikel in einer Endkonzentration von 1,0 bis 4,0 Gew.-%, bezogen auf das Gesamtgewicht der Dispersion, zugegeben. Anschließend werden peptisierte $TiO_2$-Partikel, die von einer Metatitansäureschicht umgegeben sind und mit einer Schicht aus $Al_2O_3$ peptisiert wurden, eindispergiert. Diese peptisierten $TiO_2$-Partikel weisen einschliesslich der $Al_2O_3$-Schicht eine Größe in einem Bereich von 30 bis 50 nm, vorzugsweise 35 bis 45 nm, auf. Vorzugsweise werden die $TiO_2$-Partikel in einer Endkonzentration von 1,0 bis 2,5 Gew.-% bezogen auf das Gesamtgewicht der Dispersion zugegeben. Die Gewichtsprozentangabe bezieht sich nur auf das Gewicht des zugesetzten $TiO_2$. Anschließend wird weiteres VE-Wasser zugegeben und vorzugsweise mittels Salpetersäure ein pH-Wert von $\leq 2$, vorzugsweise ein pH-Wert von 1,5 bis 2, eingestellt. Anschließend wird die Dispersion mit 0 bis 40 Gew.-% Ethanol bezogen auf das Gesamtgewicht der Dispersion versetzt. Alternativ kann anstelle des Ethanols oder zusätzlich auch ein Tensid in einer Konzentration von 0,1 bis 0,6 Gew.-%, weiter bevorzugt 0,2 bis 0,4 Gew.-%, bezogen auf das Gesamtgewicht der Dispersion zugesetzt werden.

Die Konzentration der $SiO_2$-Partikel beträgt vorzugsweise 1,0 bis 4,0 Gew.-%, bezogen auf das Gesamtgewicht der fertigen Dispersion. Die fertige Dispersion wird vorzugsweise nach der Ethanolzugabe 10 bis 15 h weiter gerührt. Vorzugsweise wird bei einer Winkelgeschwindigkeit von 600 bis 800 U/min gerührt.

Der keramische Formkörper kann vorteilhaft zur Reinigung der Luft von Abgasen und Schadstoffen verwendet werden. Beispielsweise handelt es sich bei den Abgasen oder Schadstoffen um $NO_X$, $SO_X$, Formaldehyd, Acetaldehyd und/oder Toluol.

Vorteilhafterweise weisen die erfindungsgemäßen keramischen Formkörper eine matte Oberfläche auf, wodurch die Fehlstellen weniger stark sichtbar sind.

**Figuren:**

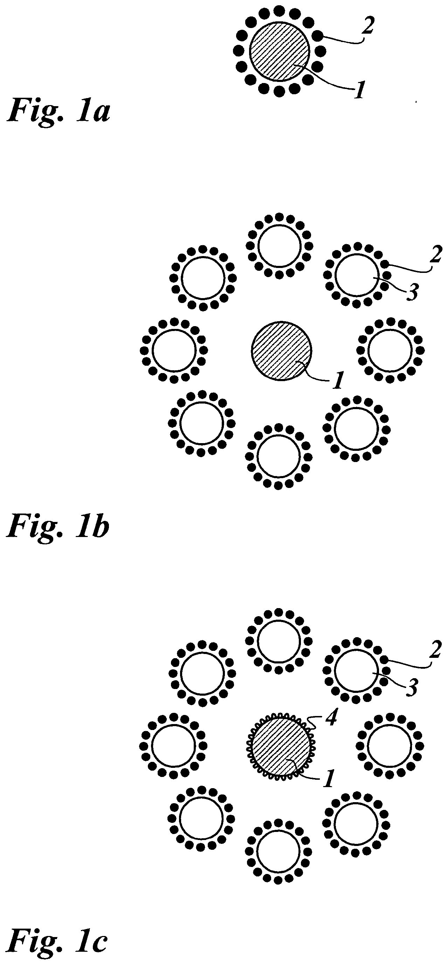

Figur 1a zeigt einen photokatalytisch aktiven $TiO_2$-Partikel 1, der eine Peptidschicht 2 aufweist.

Figur 1b zeigt einen photokatalytisch aktiven $TiO_2$-Partikel 1, der von nicht photokatalytisch aktiven Partikeln 3 sphärisch umgeben ist. Die Partikel 3 weisen jeweils eine Peptidschicht 2 auf.

Figur 1c zeigt einen photokatalytisch aktiven $TiO_2$-Partikel 1, der eine Metatitansäureschicht 4 aufweist und sphärisch von eine Peptidschicht 2 aufweisenden nicht photokatalytisch-aktiven Partikeln 3 umgeben ist.

Das nachstehend beschriebene Beispiele soll die vorliegende Erfindung näher erläutern, jedoch in keiner Weise beschränken:

**Beispiel 1a**

Zunächst wurden Kieselsäurepartikel (Levasil 200, 30%) mit einer mittleren Partikelgröße in einem Bereich von 5 nm in VE-Wasser (vollentsalztes Wasser) in einer Endkonzentration von 20 Gew.-%, bezogen auf das Gesamtgewicht der Dispersion, bei einem pH-Wert kleiner 2 dispergiert. Anschließend wurden $TiO_2$-Partikel in der Anatas-Modifikation, die von einer Metatitansäureschicht umgegeben sind und zuvor mit einer Schicht aus $Al_2O_3$ peptisiert wurden, eindispergiert (erhältlich als Hombikat XXS100 bei der Firma Sachtleben). Die peptisierten $TiO_2$-Partikel wiesen einschließlich der $Al_2O_3$-Schicht eine Aggregatgröße in einem Bereich von 30 bis 50 nm, vorzugsweise 35 bis 45 nm, auf. Die $TiO_2$-Partikel wurden in einer Endkonzentration von 20 Gew.-%, bezogen auf das Gesamtgewicht der Dispersion zugegeben. Die Gewichtsprozentangabe bezieht sich nur auf das Gewicht des zugesetzten $TiO_2$. Die mittlere Partikelgröße der reinen $TiO_2$-Partikel ohne umgebende Schichten betrug 7 nm.

Anschließend wurde mittels Salpetersäure ein pH-Wert von 2 eingestellt. Anschließend wurde durch Zugabe von VE-Wasser und Ethanol bei der fertigen Dispersion eine Konzentration von 2,4 Gew.-% $SiO_2$, 1,6 Gew.-% $TiO_2$, 30 Gew.-% Ethanol und 66 Gew.-% VE-Wasser eingestellt. Die Gewichtsprozentangabe bezieht sich nur auf das Gewicht der zugesetzten Stoffe ohne umgebende Schichten. Die Dispersion wurde 12h bei einer Winkelgeschwindigkeit von 600 U/min dispergiert. Die Dispersion wurde mit einer Schichtdicke von 187 nm auf einen Dachziegel bei einer Temperatur von 50°C aufgesprüht und bei einer Temperatur von 300 °C gehärtet.

**Beispiel 1 b**

Zunächst wurden Kieselsäurepartikel (Levasil 200E/20%, Evonik) mit einer mittleren Partikelgröße (Primäraggregate) in einem Bereich von 35 nm in VE-Wasser (vollentsalztes Wasser) in einer Endkonzentration von 20 Gew.-%, bezogen auf das Gesamtgewicht der Dispersion, in einem Gefäß vorgelegt und bei einem pH-Wert von 3 dispergiert. Anschließend wurden peptisierte $TiO_2$-Partikel in der Anatas-Modifikation eindispergiert (erhältlich als Suspension VP Disp. W740X bei der Firma Evonik). Die TiO$_2$-Partikel wiesen einschließlich der Peptisierung eine Aggregatgröße (Primäraggregate) in einem Bereich von 40 bis 50 nm auf. Die TiO$_2$-Partikel wurden in einer Endkonzentration von 40 Gew.-% bezogen auf das Gesamtgewicht der Dispersion zugegeben. Die Gewichtsangabe bezieht sich nur auf das Gewicht des zugesetzten TiO$_2$.

Anschließend wurde ein nichtionisches Tensid (Pluronic F-127) beigefügt. Abschließend wurde durch die Zugabe von VE-Wasser bei der fertigen Dispersion eine Konzentration von 1,58 Gew.-% SiO$_2$ und 7,4 Gew.-% TiO$_2$ eingestellt. Die Gewichtsangabe bezieht sich nur auf das Gewicht der zugesetzten Stoffe ohne umgebende Schichten. Die Dispersion wurde für 12 h bei einer Winkelgeschwindigkeit von 600 U/min dispergiert. Das Zetapotential dieser Dispersion betrug -31 mV gemessen mit dem Zeta-Particle-Sizer DT-1200 der Firma QuantaChrome bei 25°C. Die Dispersion wurde mit einer Schichtdicke von ungefähr 200 nm auf einen Dachziegel bei einer Temperatur von 50 °C aufgesprüht und bei einer Temperatur von 300°C gehärtet.

### Beispiel 1c

Zunächst wurden Kieselsäurepartikel (Levasil 200E/20%) mit einer mittleren Partikelgröße (Primäraggregate) in einem Bereich von 35 nm in VE-Wasser (vollentsalztes Wasser) in einer Endkonzentration von 20 Gew.-%, bezogen auf das Gesamtgewicht der Dispersion in einem Gefäß vorgelegt und bei einem pH-Wert von 3 dispergiert. Anschließend wurden peptisierte TiO$_2$-Partikel in der Anatas-Modifikation eindispergiert (erhältlich als Suspension S5-300B bei der Firma Millennium). Die TiO$_2$-Partikel wiesen einschließlich der Peptisierung eine Aggregatgröße in einem Bereich von 20 bis 30 nm (Primäraggregate) auf. Die TiO$_2$-Partikel wurden in einer Endkonzentration von 20 Gew.-%, bezogen auf das Gesamtgewicht der Dispersion, zugegeben. Die Gewichtsangabe bezieht sich nur auf das Gewicht des zugesetzten TiO$_2$. Die mittlere Partikelgröße der reinen TiO$_2$-Partikel ohne Peptisierung betrug 7 nm. Anschließend wurde ein nichtionisches Tensid (Pluronic F-127) beigefügt. Abschließend wurde durch die Zugabe von VE-Wasser bei der fertigen Dispersion eine Konzentration von 1,58 Gew.-% SiO$_2$ und 3,38 Gew.-% TiO$_2$ eingestellt. Die Gewichtsangabe bezieht sich nur auf das Gewicht der zugesetzten Stoffe ohne umgebende Schichten. Die Dispersion wurde für 12 h bei einer Winkelgeschwindigkeit von 600 U/min dispergiert. Das Zetapotential dieser Dispersion betrug -28 mV gemessen mit dem Zeta-Particle-Sizer DT-1200 der Firma QuantaChrome bei 25°C. Die Dispersion wurde mit einer Schichtdicke von ungefähr 200 nm auf einen Dachziegel bei 50°C aufgesprüht und bei einer Temperatur von 300°C gehärtet.

### Vergleichsbeispiel 2

Die Dispersion wurde wie in Beispiel 1 hergestellt mit dem Unterschied, daß die TiO$_2$-Partikel (P25 der Firma Degussa) eine Partikelgröße von 21 nm und die SiO$_2$ eine Partikelgröße von 5 bis 15 nm aufwiesen. Ferner waren die TiO$_2$-Partikel nicht von Metatitansäure und peptisiertem Al$_2$O$_3$ umgeben. Ferner wurde ein pH-Wert von 10 eingestellt. Die Dispersion wurde mit einer Schichtdicke von 270 nm auf einen Dachziegel bei einer Temperatur von 50°C aufgesprüht und bei einer Temperatur von 300 °C gehärtet.

### Beispiel 3

Der Abbau von NOx, Methylstearat und Methylenblau wurde gemessen und als Photoneneffizienz angegeben. Die Photoneneffizienz ist die Ausbeute der bei einer Wellenlänge von 350 nm zur Verfügung stehenden Photonen bezogen auf die bestrahlte Ziegelfläche.

### 1. Methylenblauabbau

### 1.1 Bestrahlungsversuch

Alle Ziegel wurden vor dieser Untersuchung 3 Tage mit 1,0 mW/cm$^2$ UV-A Licht vorbestrahlt.

Aufgrund der großen inneren Oberfläche der Ziegel wurden diese sowohl während des Adsorptionsversuches als auch während der Bestrahlung konstant feucht gehalten, um ein Aufsaugen der Methylenblaulösungen zu vermeiden.

Für diese Untersuchung wurde zunächst eine definierte Menge einer 0,02 mM Adsorptionslösung (Methylenblau) auf die zu testende Oberfläche aufgebracht und für mindestens 12 h in Dunkelheit verwahrt. Diese Vorbehandlung dient dazu, den stark flüssigkeitsadsorbierenden Ziegel mit Methylenblaulösung zu sättigen, so dass in dem folgenden Experiment Verfälschungen durch eine Methylenblauaufnahme des Ziegels aufgrund der Adsorption im Ziegel vermieden wurden.

Anschließend wurde für das Experiment die Adsorptionslösung durch eine 0,01 mM Methylenblaulösung ersetzt und das gesamte System wurde für 3 h mit 1,0 mW/cm$^2$ UV-A Schwarzlicht bestrahlt.

Die Absorptionswerte dieser Farbstofflösung wurden vor und nach der Bestrahlung bei der Wellenlänge von 663 nm gemessen, um die in der Lösung verbliebene Farbstoffkonzentration zu bestimmen.

Über einen Zeitraum von 3h wurde alle 20 min eine Probe entnommen und ein Absorptionsspektrum bei 663 nm gemessen. Die Abnahme der Absorption ist proportional zur Konzentrationsabnahme des Methylenblaus, wobei die Methylenblaukonzentration anhand einer bekannten Eichkurve bestimmt wurde. Somit wurde eine Abbaurate a [nM/min] erhalten.

Der gesamte Versuch wurde nochmals im Dunkeln wiederholt, um den lichtunabhängigen Methylenblauverlust zu bestimmen.

Die unter UV-Bestrahlung gemessene Abbaurate a wurde um die im Dunkelversuch ermittelte $a_d$ korrigiert:

$$a_c = a - a_d = 5{,}65 \text{ nM/min.}$$

Es wurde angenommen, dass zur Entfärbung eines Methylenblaumoleküls ein Photon (hv) benötigt wird. Aus der Abbaurate lässt sich dann wie folgt die Photoneneffizienz, die ein absolutes Maß für die photokatalytische Aktivität ist, ermitteln.

Aus den Einsteinschen Beziehungen der Frequenz $\nu$ und der Wellenlänge $\lambda$ zur Lichtgeschwindigkeit $c = \nu \cdot \lambda$ und der Beziehung der Frequenz zur Energie $E = h \cdot \nu$, sowie

der Avogadrozahl $N_a$ ergibt sich die Energie eines Mols (n) Photonen einer bestimmten Wellenlänge mit $E_{n,\lambda} = N_a \cdot h \cdot c/\lambda$.

Ein Mol Photonen der Wellenlänge von 350 nm hat demnach die Energie von

$$E_{n,\ 350nm} = 6{,}022 \cdot 10^{23} \text{ mol}^{-1} \cdot 6{,}626 \cdot 10^{-34} \text{ Js} \cdot 2{,}998 \cdot 10^{8} \text{ ms}^{-1}/350 \cdot 10^{-9} \text{ m} =$$

$$3{,}418 \cdot 10^{5} \text{ J/mol.}$$

Bei Bestrahlung einer Probenfläche $A = 10{,}75 \text{ cm}^2$ mit UV-A Licht der Wellenlänge $\lambda = 350$ nm und einer Strahlungsdichte von $\rho = 1{,}0 \text{ mW/cm}^2 = 1{,}0 \cdot 10^{-3} \text{ J/s cm}^2$ ergibt sich ein Photonenfluß

$$\varphi = A \cdot \rho / E_{n,\ 350nm} = 10{,}75 \text{ cm}^2 \cdot 1{,}0 \cdot 10^{-3} \text{ J/s cm}^2 \cdot 3600\text{s/h} \quad /3{,}418 \cdot 10^{5} \text{ J}$$

$$\text{mol}^{-1} = 1{,}13 \cdot 10^{-4} \text{ molh}\nu/\text{h.}$$

Das bestrahlte Probenvolumen beträgt $V = 30\text{mL} = 0{,}03$ L.

Aus der Abbaurate und den genannten Parametern ergibt sich dann die Photoneneffizienz $\xi = a_c\ V / \varphi = 5{,}65$ nM/min $\cdot$ 60 min/h $\cdot$ 0,03 L / 1,13 $\cdot$ 10^{-4} molhv/h $\cdot$ = 0,009 % .

Die vorstehende Rechnung erläutert die Berechnung des Methylenabbaus in Beispiel 1. Analog wurde auch der Methylenabbau im Vergleichsbeispiel 2 berechnet.

## 2. Stearatabbau

Alle Ziegel wurden vor diesen Untersuchungen 3 Tage mit $1{,}0 \text{ mW/cm}^2$ UV-A Licht vorbestrahlt.

Aufgrund der großen inneren Oberfläche der Ziegel wurden auch während dieser Versuche die Ziegel konstant feucht gehalten, um ein Aufsaugen der Methylstearatlösung zu vermeiden.

Auf alle Testziegel wurde eine definierte Menge einer 5 mM Methylstearat in n-Hexan-Lösung aufgetragen und diese anschließend für 23 Stunden mit $1{,}0 \text{ mW/cm}^2$ UV-A Licht bestrahlt.

Nach Abschluss des Bestrahlungsexperiments wurde das auf den Ziegeln verbliebene Methylstearat mit einer ebenfalls definierten Menge n-Hexan (5 mL) abgewaschen und mit Hilfe der Gaschromatographie (FID) mengenmäßig bestimmt.

Der Vergleich mit einem zuvor ermittelten Referenzwert (bestimmt durch Auftragen der definierten Menge Methylstearat und sofortiges Abwaschen der Methylstearatschicht mit n-Hexan ohne vorherige Bestrahlung) ergab Aufschluss über die photokatalytische Aktivität der Ziegeloberflächen.

Für diese Versuchsreihe wurde eine 5 mM Methylstearat in n-Hexan-Lösung benutzt, so dass sich bezogen auf die Abwaschmenge (5 mL n-Hexan) eine Konzentration von 0,5 mM ergab.

Aus der Abnahme der im GC gemessenen Stearatkonzentrationen wurde die Abbaurate a [$\mu$M/min] erhalten. Der gesamte Versuch wurde nochmals im Dunkeln wiederholt, um den lichtunabhängigen Stearatverlust zu bestimmen.

Die unter UV-Bestrahlung gemessene Abbaurate a wurde um die im Dunkelversuch $a_d$ ermittelte korrigiert $a_c$

$= a - a_d = 11,34 \; \mu M/h$.

Es wurde angenommen, dass zur Zerstörung eines Methylstearatmoleküls ein Photon (hv) benötigt wird. Aus der Abbaurate ließ sich dann wie folgt die Photoneneffizienz, die ein absolutes Maß für die photokatalytische Aktivität ist, ermitteln. Bei Bestrahlung einer Probenfläche A = 36 cm² mit UV-A Licht der Wellenlänge $\lambda$ = 350 nm und einer Strahlungsdichte von $\rho$ = 1,0 mW/cm² = 1,0 · 10⁻³J/s cm² ergab sich ein Photonenfluß

$$\varphi = A \cdot \rho \cdot l \, / \, E_{n, \, 350nm} \; = \; 36 \; cm^2 \cdot 1,0 \cdot 10^{-3} J/s \; cm^2 \; \cdot 3600s/h \cdot 3,418 \cdot 10^5 \; J \; mol^{-1}$$

$$= 3,78 \cdot 10^{-4} \; mol h\nu/h.$$

Das analysierte Probenvolumen betrug V = 5 mL = 0,005 L. Aus der Abbaurate und den genannten Parametern ergab sich dann die Photoneneffizienz

$$\zeta = a_c \cdot V \, / \, \varphi = 11,34 \; \mu M/h \cdot 0,005 \; L \, / \, 3,78 \cdot 10^{-4} \; mol h\nu/h = 0,015 \; \%.$$

Die vorstehende Rechnung erläutert die Berechnung des Stearatabbaus in Beispiel 1. Analog wurde auch der Stearatabbau im Vergleichsbeispiel 2 berechnet.

### 3. NO$_x$ Abbau

Der NO$_x$-Abbau wurde nach dem bereits in Japan standardisierten Verfahren JIS R 1701-1, Januar 2004, durchgeführt. Dabei wurde der zu untersuchende Probenkörper von 50 x 100 mm² Fläche in eine 50 cm lange UV-durchlässige Glasröhre von 50 mm Durchmesser gelegt. Die in der Röhre befindliche Probe wurde mit UV-A Licht der Intensität von 1,0 mW/cm² bestrahlt. Durch die Röhre wurde Luft (relative Luftfeuchte 50%) mit einem Gehalt von 1 ppm NO und einer Flussrate von 3 L/min über eine Probe der Größe 50 x 100 mm² geleitet. Die Analyse erfolgte mit einem NO/NO$_2$-Analysator, der über einen Fluoreszenzdetektor mit einer Nachweisgrenze von 1 ppb NO verfügt. Die Bestrahlung erfolgte mit UV-(A) Lampen, wobei die Lichtintensität an der Probenoberfläche 1 mW/cm² betrug.

Eine absolute Meßdauer ist nicht erforderlich, da es sich um eine kontinuierliche Apparatur handelt. Es wurde also die NOx-Konzentration der die Probe durchströmenden Luft am Ende der Röhre im Vergleich zu der Anfangskonzentration gemessen. Aus der Strömungsgeschwindigkeit von 3L/min konnte die Abbaurate wie folgt ermittelt werden:

Auswertung:

Die Bestrahlungsleistung betrug 1 mW/cm², was bei einer Probengröße von 50 cm² einer Gesamtleistung von 50 mW entspricht. Bei einer mittleren Bestrahlungswellenlänge von 350 nm gilt:

$$50mW = 1,47 \; x \; 10^{-7} \; mol h\nu/s$$

Die kontinuierliche Messapparatur wurde mit einer Flussrate von 3 L/min betrieben.

Für ein ideales Gas gilt:

24 L Gas = 1 mol (bei p = 1 bar und 25°)

d.h., in 8 min strömte 1 mol Gas über die Probe. Davon waren 1 ppm NO, also strömten 10⁻⁶ mol NO über die Probe. In dieser Zeit wurde die Probe mit

$$1,47 \; x \; 10^{-7} \; mol h\nu/s \; x \; 60 \; s/min \; x \; 8 \; min = 70 \; x \; 10^{-6} \; mol h\nu$$

bestrahlt. Bei einem vollständigen Abbau des zudosierten NO betrug die Photoneneffizienz $\zeta$ somit:

$$\varsigma = 10^{-6} \; mol \; NO \, / \, 70 \; x \; 10^{-6} \; mol h\nu = 0,0143 = 1,43 \; \%$$

Misst man einen Abbau von x ppm NO, so berechnet sich die Photoneneffizienz entsprechend nach folgender Formel:

$$\varsigma_x = x \, (\text{ppm}) \cdot 1{,}43 \, (\% \, / \, \text{ppm})$$

In Beispiel 1 wurde eine Abnahme von 0,056 ppm gemessen.

$$\varsigma_x = x \, (\text{ppm}) \cdot 1{,}43 \, (\% \, / \, \text{ppm}) = 0{,}056 \, \text{ppm} \cdot 1{,}43 \, (\% \, / \, \text{ppm}) = 0{,}08 \, \%$$

Die vorstehende Rechnung erläutert die Berechnung des $NO_x$-Abbaus in Beispiel 1 a. Analog wurde auch der $NO_x$-Abbau in den Beispielen 1b und 1 c sowie Vergleichsbeispiel 2 berechnet.

Ergebnis der Beispiele 1 a, b und c und Vergleichsbeispiel 2

| Ziegel | Abbau (% Photoneneffizienz) | | |
|---|---|---|---|
| | NOx | Methylstearat | Methylenblau |
| Beispiel 1 a | 0,080 | 0,015 | 0,009 |
| Beispiel 1 b | 0,033 | 0,062 | 0,036 |
| Beispiel 1 c | 0,064 | 0,058 | 0,040 |
| Vergleichsbeispiel 2 | 0,003 | 0,008 | 0,008 |

Die erfindungsgemäßen Dachziegel aus Beispiel 1 a, b und c zeigten einen deutlich besseren Abbau von NOx, Methylstearat und Methylenblau als die herkömmlich Dachziegel des Vergleichsbeispiels 2. Die erfindungsgemäßen Dachziegel eignen sich somit insbesondere in Ballungsräumen zum Abbau von Schadstoffen aus der Luft. Insbesondere bei den gemäß Beispiel 1b und 1 c ohne Alkohol, d.h. in wässeriger Dispersion, hergestellten Dachziegeln, findet ein enorm verbesserter Abbau von Methylstearat und Methylenblau statt.

**Patentansprüche**

1. Keramischer Formkörper, nämlich Dachziegel, Ziegel, Klinker und/oder eine Fassadenplatte, aus oxidkeramischem Basismaterial mit Kapillargefüge mit einer luftreinigenden Oberflächenbeschichtung, wobei die Oberflächenbeschichtung peptisierte photokatalytisch-aktive Partikel umfasst und/oder photokatalytisch-aktive Partikel umfasst, welche von einer Schicht aus peptisierten Partikeln umgeben sind, wobei die photokatalytisch-aktiven Partikel eine nach der BET-Methode ermittelte spezifische Oberfläche von 250 bis 500 $m^2$/g aufweisen und wobei die peptisierten photokatalytisch-aktiven Partikel und/oder photokatalytisch-aktiven Partikel als Primäraggregate ausgebildet sind.

2. Keramischer Formkörper nach Anspruch 1, wobei die photokatalytisch-aktiven Partikel, ohne Peptisierung gemessen, eine mittlere Partikelgröße von 2 bis 20 nm aufweisen.

3. Keramischer Formkörper nach einem der vorhergehenden Ansprüche, wobei die photokatalytisch-aktiven Partikel aus der Gruppe, bestehend aus $TiO_2$ in der Rutil-Modifikation, $TiO_2$ in der Anatas-Modifikation, ZnO, $\alpha$-$Fe_2O_3$, $\gamma$-$Al_2O_3$, $SrTiO_3$, $SnO_2$, $WO_3$, $Bi_2O_3$ und Mischungen davon, ausgewählt sind.

4. Keramischer Formkörper nach Anspruch 3, wobei die $TiO_2$-Partikel durch ein Sulphataufschlußverfahren herstellbar sind.

5. Keramischer Formkörper nach einem der vorhergehenden Ansprüche, wobei die nicht photolcatalytisch-aktiven Partikel, ausgewählt sind aus der Gruppe, bestehend aus $\alpha$-$Al_2O_3$, $SiO_2$ und Mischungen davon.

6. Keramischer Formkörper nach einem der vorhergehenden Ansprüche, wobei die Oberflächenbeschichtung $TiO_2$-Partikel umfasst, die von einer vollständig oder teilweise geschlossenen Schicht aus peptisierten $Al_2O_3$-Par-

tikeln umgeben sind und/oder peptisierte TiO$_2$-Partikel umfasst.

7. Keramischer Formkörper nach Anspruch 6, wobei zwischen den TiO$_2$-Partikeln und der vollständig oder teilweise geschlossenen Schicht aus peptisierten Al$_2$O$_3$-Partikein eine Metatitansäureschicht angeordnet ist und/oder wobei zwischen den TiO$_2$-Partikeln und der Peptidschicht eine Metatitansäureschicht angeordnet ist.

8. Verfahren zur Herstellung eines grobkeramischen Formkörpers, nämlich eines Dachziegels, Ziegels, Klinkers und/oder einer Fassadenplatte, aus oxidkeramischem Basismaterial mit Kapillargefüge und luftreinigender Oberflächenbeschichtung, wobei das Verfahren die folgenden Schritte umfasst:

a) Bereitstellen einer Dispersion, umfassend peptisierte photokatalytisch-aktive Partikel und/oder photokatalytisch-aktive Partikel, welche von einer Schicht aus peptisierten Partikeln umgeben sind, wobei die photokatalytisch-aktiven Partikel eine nach der BET-Methode ermittelte spezifische Oberfläche von 250 bis 500 m$^2$/g aufweisen und wobei peptisierte Partikel Partikel sind, an die Salpetersäure, Zitronensäure und/oder Salzsäure angelagert ist,
b) Aufbringen der in Schritt a) hergestellten Dispersion auf das oxidkeramische Basismaterial mit Kapillargefüge, und
c) Trocknen der in Schritt b) bereitgestellten Schicht unter Ausbildung der Oberflächenbeschichtung.

9. Verfahren nach Anspruch 8, wobei in Schritt a) peptisierte photokatalytisch-aktive Partikel und/oder photokatalytisch-aktive Partikel, welche von einer Schicht aus peptisierten Partikeln umgeben sind, eingesetzt werden, wie in den Ansprüchen 1 bis 7 definiert.

10. Verwendung des keramischen Formkörpers nach einem der Ansprüche 1 bis 7 zur Reinigung der Luft von Abgasen.

11. Verwendung nach Anspruch 10, wobei es sich bei den Abgasen um NO$_x$, SO$_x$, Formaldehyd, Acetaldehyd und/oder Toluol handelt.

## Claims

1. Ceramic moulded body, in particular a roof tile, tile, brick and/or façade panel, made of an oxide ceramic base material having a capillary structure with an air-purifying surface coating, wherein
the surface coating comprises peptised photocatalytically active particles and/or photocatalytically active particles which are surrounded by a layer made of peptised particles, wherein the photocatalytically active particles have a specific surface ascertained by the BET method of 250 to 500 m$^2$/g and wherein the peptised photocatalytically active particles and/or photocatalytically active particles are formed as primary aggregates.

2. Ceramic moulded body according to claim 1, wherein the photocatalytically active particles, measured without peptization, have an average particle size of 2 to 20 nm.

3. Ceramic moulded body according to one of the preceding claims, wherein
the photocatalytically active particles are selected from the group consisting of TiO$_2$ in the rutile modification, TiO$_2$ in the anatase modification, ZnO, $\alpha$-Fe$_2$O$_3$, $\Upsilon$-Al$_2$O$_3$, SrTiO$_3$, SnO$_2$, WO$_3$, Bi$_2$2O$_3$ and mixtures of these.

4. Ceramic moulded body according to claim 3, wherein the TiO$_2$ particles are able to be manufactured by a sulphate decomposition method.

5. Ceramic moulded body according to one of the preceding claims, wherein the particles that are not photocatalytically active are selected from the group consisting of $\alpha$-Al$_2$O$_3$, SiO$_2$ and mixtures thereof.

6. Ceramic moulded body according to one of the preceding claims, wherein the surface coating comprises TiO$_2$ particles that are surrounded by a completely or partially sealed layer made of peptised Al$_2$O$_3$ particles and/or comprises peptised TiO$_2$ particles.

7. Ceramic moulded body according to claim 6, wherein a metatitanic acid layer is arranged between the TiO$_2$ particles and the completely or partially sealed layer made of peptised Al$_2$O$_3$ particles and/or wherein a metatitanic acid layer is arranged between the TiO$_2$ particles and the peptide layer.

**8.** Method for producing a coarse ceramic moulded body, in particular a roof tile, tile, brick and or a façade panel, made of an oxide ceramic base material having a capillary structure and an air-purifying surface coating, wherein the method comprises the following steps:

a) providing a dispersion, comprising peptised photocatalytically active particles and/or photocatalytically active particles which are surrounded by a layer made of peptised particles, wherein the photocatalytically active particles have a specific surface ascertained by the BET method of 250 to 500 $m^2/g$ and wherein peptised particles are particles to which the nitric acid, citric acid and/or hydrochloric acid is attached,
b) applying the dispersion produced in step a) to the oxide ceramic base material having a capillary structure, and
c) drying the layer provided in step b) to form the surface coating.

**9.** Method according to claim 8, wherein peptised photocatalytically active particles and/or photocatalytically active particles that are surrounded by a layer made of peptised particles are used in step a), as defined in claims 1 to 7.

**10.** Use of the ceramic moulded body according to one of claims I to 7 for purifying the air of exhaust fumes.

**11.** Use according to claim 10, wherein the exhaust fumes are $NO_x$, $SO_x$, formaldehyde, acetaldehyde and/or toluene.

## Revendications

**1.** Objet moulé céramique, plus précisément tuile, brique, clinker, et/ou une dalle de façade, en un matériau de base céramique à base d'oxydes ayant une structure capillaire et un revêtement superficiel purificateur d'air, dans lequel le revêtement superficiel comprend des particules peptisées photocatalytiquement actives et/ou comprend des particules photocatalytiquement actives, qui sont entourées d'une couche de particules peptisées, les particules photocatalytiquement actives présentant une aire spécifique, déterminée par la méthode BET, de 250 à 500 $m^2/g$, et les particules peptisées photocatalytiquement actives et/ou les particules photocatalytiquement actives étant conçues comme des agrégats primaires.

**2.** Objet moulé céramique selon la revendication 1, dans lequel les particules photocatalytiquement actives présentent, mesurée sans peptisation, une granulométrie moyenne de 2 à 20 nm.

**3.** Objet moulé céramique selon l'une des revendications précédentes, dans lequel les particules photocatalytiquement actives sont choisies dans le groupe consistant en $TiO_2$ dans sa modification rutile, $TiO_2$ dans sa modification anatase, ZnO, $\alpha$-$Fe_2O_3$, $\gamma$-$Al_2O_3$, $SrTiO_3$, $SnO_2$, $WO_3$, $Bi_2O_3$, et les mélanges de ceux-ci.

**4.** Objet moulé céramique selon la revendication 3, dans lequel les particules de $TiO_2$ peuvent être fabriquées par un procédé de lessivage au sulfate.

**5.** Objet moulé céramique selon l'une des revendications précédentes, dans lequel les particules non-photocatalytiquement actives sont choisies dans le groupe consistant en $\alpha$-$Al_2O_3$, $SiO_2$ et les mélanges de ceux-ci.

**6.** Objet moulé céramique selon l'une des revendications précédentes, dans lequel le revêtement superficiel contient des particules de $TiO_2$ qui sont entourées d'une couche, entièrement ou partiellement fermée, de particules d'$Al_2O_3$ peptisées, et/ou comprend des particules de $TiO_2$ peptisées.

**7.** Objet moulé céramique selon la revendication 6, dans lequel une couche d'acide métatitanique est disposée entre les particules de $TiO_2$ et la couche, entièrement ou partiellement fermée, de particules d'$Al_2O_3$ peptisées, et/ou dans lequel une couche d'acide métatitanique est disposée entre les particules de $TiO_2$ et la couche de peptides.

**8.** Procédé de fabrication d'un objet moulé céramique grossier, plus précisément d'une tuile, d'une brique, d'un clinker et/ou d'une dalle de façade, en un matériau de base céramique à base d'oxydes à structure capillaire et ayant un revêtement superficiel purificateur d'air, le procédé comprenant les étapes suivantes :

a) mise à disposition d'une dispersion comprenant des particules peptisées photocatalytiquement actives et/ou des particules photocatalytiquement actives, qui sont entourées d'une couche de particules peptisées, les particules photocatalytiquement actives présentant une aire spécifique, déterminée par la méthode BET, de 250 à 500 $m^2/g$, et les particules peptisées étant des particules sur lesquelles sont fixés de l'acide nitrique, de l'acide citrique et/ou de l'acide chlorhydrique,

b) application de la dispersion fabriquée dans l'étape a) sur le matériau de base céramique à base d'oxydes à structure capillaire, et

c) séchage de la couche mise à disposition dans l'étape b), avec formation du revêtement superficiel.

9. Procédé selon la revendication 8, dans lequel dans l'étape a) les particules peptisées photocatalytiquement actives et/ou les particules photocatalytiquement actives qui sont entourées d'une couche de particules peptisées sont utilisées comme défini dans les revendications 1 à 7.

10. Utilisation de l'objet moulé céramique selon l'une des revendications 1 à 7 pour débarrasser l'air d'effluents gazeux.

11. Utilisation selon la revendication 10, pour laquelle, pour ce qui concerne les effluents gazeux, il s'agit de $NO_x$, de $SO_x$, de formaldéhyde, d'acétaldéhyde et/ou de toluène.

*Fig. 1a*

*Fig. 1b*

*Fig. 1c*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03101913 A
- EP 1659106 A2
- JP 11061798 B
- US 6576589 B1
- EP 1175259 B1